# EUROPEAN PATENT SPECIFICATION

(11) **EP 2 916 219 B1**
(45) Date of publication and mention of the grant of the patent: **17.07.2019**
(21) Application number: 14157480.6
(22) Date of filing: 03.03.2014
(51) Int. Cl.: G06F 8/61, G06F 8/65

(54) **A system and a method for elevator software updating in elevator processor boards**
System und Verfahren für Aufzugs-Softwareaktualisierung auf Aufzugsprozessorkarten
Système et procédé de mise à jour de logiciel d'ascenseur dans des cartes processeurs d'ascenseur

(43) Date of publication of application: 09.09.2015
(73) Proprietor: KONE Corporation, 00330 Helsinki (FI)
(72) Inventor: Staengler, Ferenc, 05810 Hyvinkää (FI); Kattainen, Ari, 05830 Hyvinkää (FI); Ingman, Claus, 11910 Riihimäki (FI); Korpela, Jukka, 05830 Hyvinkää (FI)
(74) Representative: Papula Oy

(56) References cited:
- DE-A1-102009 018 761
- US-A1- 2007 080 026
- US-A1- 2009 049 441
- US-A1- 2011 072 423

## Description

### BACKGROUND OF THE INVENTION

### Field of the invention:

The invention relates to elevators, elevator control systems, elevator control system maintenance, and a method and a system for elevator software updating in elevator processor boards.

### Description of the Related Art:

A modern elevator has a complex control system that is in charge of, for example, power supply, safety, elevator call control and information display. The control system comprises a plurality of Printed Circuit Boards (PCB). A significant portion of the PCBs are computer boards that comprise at least one processor and a memory. The computer boards have software which may be read from a local Read-Only Memory (ROM). The ROM may be a Programmable ROM such as an Electrically Erasable Programmable Read-Only Memory (EEPROM) or a Flash Memory. The computer boards are arranged to communicate via at least one message bus. The computer boards exchange signals over the message bus pertaining to the elevator state and elevator related events.

A problem in elevator control systems is the long lifetime of the elevator installation compared to, for example, office computer systems. This means that it is necessary to be able to supply spare parts to the control system for a considerably long time such as, for example, 25 years. However, in a considerably long time periods the availability of individual electronics components becomes an issue. It may become necessary to replace a processor, a memory circuit or an entire computer board with a new variant. The problem in the substituting of new processors for old processors is often the incompatibility of the existing software with a new processor. New software must be prepared for the new processor so that the new software performs the tasks of the old software. However, considerable care must be taken not to change any of the messaging protocols that are used to communicate with other computer boards in the elevator control system. This means that the message structures must remain identical and the message exchange rules such as messaging patterns and timers must also remain similar. It may not always be possible to ensure sufficient compatibility when existing software is ported to a new platform such as a new processor. The re-developing of old software for a new processor or a new computer board is not straightforward, because the architectural differences between an old processor and a new substitute processor may be significant. When a new component is installed on an existing computer board or when a new computer board substitutes an old board, the elevator system must be tested for correct operation of the different aspect of the system. The degree how extensive the testing is depends on the maintenance personnel. Similarly, when new software is installed on an existing computer board, for example, to fix a software bug or to add new features, the elevator system must be tested on the installation site for correct operation in order to determine the compatibility of the new software on the existing computer board with existing software on other existing computer boards. Further, the installation of new software to an elevator control system requires replacing read-only memory circuits storing software directly in computer boards.

Therefore, it would be beneficial if it was possible to perform software upgrading in a guided manner without performing the software compliance testing separately and repeatedly in each installation site.

US2009049441 relates to remote update system for an elevator control program, which is capable of sequentially realizing update of control programs of a plurality of elevators with reduced communication time and costs without stopping the plurality of elevators at the same time. A server delivers to a representative elevator update data including differential information between the control program of a version before update and the control program of the latest version to be updated to through a communication line, and the representative elevator and other elevators to sequentially transfer the update data according to a predetermined transfer order, and update their own control programs based on the update data including the differential data.

US2007080026 relates to a method for placing a conveying installation in operation, the conveying installation including several components, wherein at least one conveying mechanism, an installation control and a drive are included. A control program suitable for different installation controls contains different control functions. The control program is executed in the installation control for operation of the conveying installation. The method including the steps of: activating the conveying installation; recognizing identification numbers of components of the conveying installation; checking whether the recognized identification numbers belong to permitted component combinations; recognizing the installation control type; activating the different control functions in the control program in dependence on the recognized installation control type; and releasing the conveying installation for operation.

### SUMMARY OF THE INVENTION:

According to an aspect of the invention, the invention is a method, comprising: receiving, by a software update computer unit, a unique identifier of an elevator control system, wherein the elevator control system comprises at least three computer boards each computer board comprising a memory and at least one processor; transmitting, by the software update computer unit, the unique identifier received to a server over a network; retrieving information of a current hardware configuration of the elevator control system using the unique identifier from a memory associated with the server; determining, by the server, equipment identifiers from the current hardware configuration information for the at least three computer boards; finding, by the server from the memory associated with the server, at least three computer program version lists, respectively, for the at least three computer boards based on the determined equipment identifiers of the at least three computer boards; selecting, by the server, a list among the at least three computer program version lists; selecting, by the server, a computer program version from the selected list; determining, by the server, which of the computer program versions in the at least two computer program version lists remaining are compatible with the computer program version selected based on predetermined computer program version compatibility information stored in the memory associated with the server, thereby yielding information that identifies computer programs for the at least three computer boards, the identified computer programs being mutually compatible; transmitting the information identifying the computer programs for the at least three computer boards to the software update computer unit; retrieving at least one computer program of the identified computer programs for the at least three computer boards into the software update computer unit using the information identifying the computer programs for the at least three computer boards; and installing the at least one retrieved computer program in the respective computer board by the software update computer unit.

According to a further aspect of the invention, the invention is an apparatus comprising at least one processor and at least one memory including computer program code, the at least one memory and the computer program code configured to, with the at least one processor, cause the apparatus at least to perform: receiving, by the apparatus, a unique identifier of an elevator control system, wherein the elevator control system comprises at least three computer boards each computer board comprising a memory and at least one processor; transmitting, by the apparatus, the unique identifier received to a server over a network, the server storing a current hardware configuration of the elevator control system associated with the unique identifier in a memory associated with the server, the current hardware configuration comprising equipment identifiers for the at least three computer boards, the server storing information on computer program versions available for the at least three computer boards identified with the equipment identifiers, the server also storing information on mutual compatibility of the computer program versions available for the plurality of computer boards; receiving information identifying computer programs for the at least three computer boards to the software update computer unit, the identified computer programs being mutually compatible; retrieving at least one computer program of the identified computer programs for the at least three computer boards into the software update computer unit using the information identifying the computer programs for the at least three computer boards; and installing the at least one retrieved computer program in the respective computer board by the software update computer unit.

According to a further aspect of the invention, the invention is an apparatus comprising: means for receiving, by the apparatus, a unique identifier of an elevator control system, wherein the elevator control system comprises at least three computer boards each computer board comprising a memory and at least one processor; means for transmitting, by the apparatus, the unique identifier received to a server over a network, the server storing a current hardware configuration of the elevator control system associated with the unique identifier in a memory associated with the server, the current hardware configuration comprising equipment identifiers for the at least three computer boards, the server storing information on computer program versions available for the at least three computer boards identified with the equipment identifiers, the server also storing information on mutual compatibility of the computer program versions available for the plurality of computer boards; means for receiving information identifying computer programs for the at least three computer boards to the software update computer unit, the identified computer programs being mutually compatible; means for retrieving at least one computer program of the identified computer programs for the at least three computer boards into the software update computer unit using the information identifying the computer programs for the at least three computer boards; and means for installing the at least one retrieved computer program in the respective computer board by the software update computer unit.

According to a further aspect of the invention, the invention is a software update computer comprising the apparatus.

According to a further aspect of the invention, the invention is a computer program comprising code adapted to cause the following when executed on a data-processing system: receiving, by the apparatus, a unique identifier of an elevator control system, wherein the elevator control system comprises at least three computer boards each computer board comprising a memory and at least one processor; transmitting, by the apparatus, the unique identifier received to a server over a network, the server storing a current hardware configuration of the elevator control system associated with the unique identifier in a memory associated with the server, the current hardware configuration comprising equipment identifiers for the at least three computer boards, the server storing information on computer program versions available for the at least three computer boards identified with the equipment identifiers, the server also storing information on mutual compatibility of the computer program versions available for the plurality of computer boards; receiving information identifying computer programs for the at least three computer boards to the software update computer unit, the identified computer programs being mutually compatible; retrieving at least one computer program of the identified computer programs for the at least three computer boards into the software update computer unit using the information identifying the computer programs for the at least three computer boards; and installing the at least one retrieved computer program in the respective computer board by the software update computer unit.

According to a further aspect of the invention, the invention is a computer program product comprising the computer program.

According to a further aspect of the invention, the invention is a method comprising: receiving, by the apparatus, a unique identifier of an elevator control system, wherein the elevator control system comprises at least three computer boards each computer board comprising a memory and at least one processor; transmitting, by the apparatus, the unique identifier received to a server over a network, the server storing a current hardware configuration of the elevator control system associated with the unique identifier in a memory associated with the server, the current hardware configuration comprising equipment identifiers for the at least three computer boards, the server storing information on computer program versions available for the at least three computer boards identified with the equipment identifiers, the server also storing information on mutual compatibility of the computer program versions available for the plurality of computer boards; receiving information identifying computer programs for the at least three computer boards to the software update computer unit, the identified computer programs being mutually compatible; retrieving at least one computer program of the identified computer programs for the at least three computer boards into the software update computer unit using the information identifying the computer programs for the at least three computer boards; and installing the at least one retrieved computer program in the respective computer board by the software update computer unit.

According to a further aspect of the invention, the invention is a method, in which method a software update computer unit receives a unique identifier of an elevator control system comprising a plurality of computer boards. The software update computer unit receives also a signal regarding an upgrading of a computer board in the elevator system with a specific new component. The signal is used to form an equipment identifier for the board by the software update unit. The equipment identifier comprises information on the current equipment on the computer board. The unique identifier and the equipment identifier are transmitted to a server from the software update computer unit. In response, from the server is received to the software update computer unit information on computer program versions for the plurality of computer boards. The computer program versions indicated by the server are mutually compatible. The information is used to retrieve at least one of the computer programs to the software update unit over a network from a memory associated with the server. The software update computer unit installs the computer programs retrieved to their appropriate computer boards.

According to a further aspect of the invention, the invention is an apparatus comprising means for performing each of the method steps.

According to a further aspect of the invention, the invention is a computer program comprising code adapted to cause the performing of each of the method steps when executed on a data-processing system.

In one embodiment of the invention, a mutual compatibility between respective computer program versions for respective two computer boards may comprise that the computer program versions have been tested together, for example, using a test elevator, to verify correct functioning of the elevator control system.

In one embodiment of the invention, a mutual compatibility between computer program versions for two computer boards means mutual compatibility between respective computer program versions for respective two computer boards.

In one embodiment of the invention, the at least one new component comprises at least one of a processor, a memory module, a chipset, a message bus and an input/output controller.

In one embodiment of the invention, the unique identifier of an elevator system is transmitted from a memory associated with the elevator system to the software update computer unit.

In one embodiment of the invention, the unique identifier is transmitted to the software update computer unit from a user interface associated with the software update computer unit.

In one embodiment of the invention, the at least one retrieved computer program comprises executable machine code.

In one embodiment of the invention, the at least one retrieved computer program comprises an executable image for loading into a random access memory of a computer board.

In one embodiment of the invention, at least one of said at least one retrieved computer program comprises a partial computer program for a computer board. The partial computer program may be referred to as a patch. The software update computer unit may be configured to transmit the partial computer program to be stored to a specific memory address in the memory of the computer board. The specific memory address may be defined in association with the computer program version, for example, as a field or a parameter in a file comprising the computer program version.

In one embodiment of the invention, the memory associated with the server comprises at least one database.

In one embodiment of the invention, the memory associated with the server comprises a distributed hash table.

In one embodiment of the invention, the mutually compatible computer program versions are retrieved to the software update computer unit from a peer-to-peer file distribution system or a distributed hash table.

In one embodiment of the invention, each retrieved computer program version may be identified, in the information on the mutually compatible computer program versions, with at least one of a file identifier, a file name, a directory path and filename, a Uniform Resource Locator (URL), a Uniform Resource Identifier (URI) and a hash key. The hash key may be used in a distributed hash table.

In one embodiment of the invention, the equipment identifier comprises at least one of a processor board type indicator, a processor model, a processor type, memory size of the computer board, a chipset model or type and a message bus model or type.

In one embodiment of the invention, the computer program version selected by the server is a latest version.

In one embodiment of the invention, the list selected by the server, among the at least three computer program version lists, is selected based on a predefined order between the at least three computer program version lists.

In one embodiment of the invention, the computer program version selected by the server is a latest version. The latest version may be the latest version available in the computer program version list selected by the server.

In one embodiment of the invention, the list selected by the server, among the at least three computer program version lists, is selected based on an equipment identifier transmitted to the server, from the software update computer unit, and the computer program version selected by the server is selected based on a computer program version identifier transmitted to the server from the software update computer unit. The equipment identifier may be entered or selected by a user of the software update computer unit via a user interface of the software update computer unit. The software update computer unit may present a list of equipment identifiers of the at least three computer boards on the user interface of the software update computer unit. The list of equipment identifiers may be obtained to the software update computer unit so that the at least three computer boards transmit their equipment identifiers to the software update computer unit. The list of equipment identifiers may be obtained to the software update computer unit so that the server transmits the list of equipment identifiers to the software update computer unit, in response to determining, by the server, equipment identifiers, from the current hardware configuration, for the at least three computer boards.

In one embodiment of the invention, the method further comprises: transmitting, from the server, the at least three computer program version lists to the software update computer unit; presenting at least one of the at least three computer program version lists on a user interface of the software update computer unit; receiving via the user interface user input that causes the server to select the selected list and to select the computer program version selected; and transmitting the user input to the server.

In one embodiment of the invention, the method further comprises: receiving, by the software update computer unit, at least one signal indicating an upgrading of a computer board with at least one new component, the upgraded computer board being among the at least three computer boards, at least two computer boards among the at least three computer boards remaining non-upgraded; deriving an equipment identifier of the upgraded computer board, based on information in the at least one signal indicating the upgrading of the upgraded computer board; transmitting, by the software update computer unit, the equipment identifier of the upgraded computer board to the server over the network; and in response to the determining of the equipment identifiers from the current hardware configuration, replacing a determined equipment identifier of the upgraded computer board with the equipment identifier transmitted to the server to obtain an updated current hardware configuration.

In one embodiment of the invention, the at least one new component comprises at least one of a processor, a memory module, a chipset, a message bus and an input/output controller.

In one embodiment of the invention, the equipment identifier comprises at least one of a processor model, a processor type, memory size of the computer board, a chipset model or type and a message bus model or type.

In one embodiment of the invention, the step of receiving the at least one signal indicating the upgrading of the computer board with the at least one new component comprises: receiving the at least one signal from a user interface communicatively connected with the software update computer unit, the at least one signal comprising information indicating at least, whether the at least one new component comprises a processor or a memory, and an identifier of the new component.

In one embodiment of the invention, the at least one signal is entered by a user via the user interface.

In one embodiment of the invention, the step of receiving the at least one signal indicating the upgrading of the computer board with the at least one new component comprises: powering on the upgraded computer board; and transmitting the at least one signal indicating the upgrading of the computer board from the upgraded computer board, in response to the powering on.

In one embodiment of the invention, the unique identifier of an elevator system is transmitted from a memory associated with the elevator system to the software update computer unit.

In one embodiment of the invention, the unique identifier is transmitted to the software update computer unit from a user interface associated with the software update computer unit.

In one embodiment of the invention, the mutually compatible computer program versions are retrieved to the software update computer unit from a peer-to-peer file distribution system or a distributed hash table.

In one embodiment of the invention, the at least three computer boards are connected to a shared message bus.

In one embodiment of the invention, the method further comprises connecting the software update computer unit to the shared message bus.

In one embodiment of the invention, the step of installing the at least one retrieved computer program in the respective computer board further comprises: receiving, by the software update computer unit, a signal indicating a presence of a connection between the software update computer unit and a connected computer board among the at least three computer boards; and installing a retrieved computer program for the connected computer board, the retrieved computer program being among the at least one retrieved computer program.

In one embodiment of the invention, the server is configured to store information of a current hardware configuration of the elevator system associated with the unique identifier in a memory associated with the server, to store information on software versions available for a plurality of computer boards identifier with an equipment identifier, and to store information on mutual compatibility of the software versions available for the plurality of computer boards.

In one embodiment of the invention, the installing the at least one retrieved computer program in the respective computer board by the software update computer unit comprises identifying the computer board for which the retrieved computer program is dedicated and installing the retrieved computer program to that computer board.

In one embodiment of the invention, the computer program is stored on a non-transitory computer readable medium. The computer readable medium may be, but is not limited to, a removable memory card, a removable memory module, a magnetic disk, an optical disk, a holographic memory or a magnetic tape. A removable memory module may be, for example, a USB memory stick, a PCMCIA card or a smart memory card.

In one embodiment of the invention, an apparatus comprising at least one processor and at least one memory including computer program code, the at least one memory and the computer program code are configured to, with the at least one processor, cause the apparatus at least to perform a method according to any of the method steps.

Embodiments not covered by the claims are not part of the invention.

The benefits of the invention are related to improved reliability of elevator control systems, ease of maintenance of elevator control system and improved software delivery for elevator control systems.

### BRIEF DESCRIPTION OF THE DRAWINGS:

The accompanying drawings, which are included to provide a further understanding of the invention and constitute a part of this specification, illustrate embodiments of the invention and together with the description help to explain the principles of the invention. In the drawings:
**Fig. 1** illustrates an elevator control system comprising a software update computer unit in one embodiment of the invention;
**Fig. 2** illustrates an elevator control system comprising a software update computer unit, which is communicatively connected with a software update server over a network in one embodiment of the invention;
**Fig. 3A** is a message sequence chart illustrating an updating of elevator control system software in the case of upgrading of hardware for at least one computer board in one embodiment of the invention;
**Fig. 3B** is a message sequence chart illustrating an updating of elevator control system software in one embodiment of the invention;
**Fig. 4A** is a block diagram illustrating a single shared connection between a software update unit and computer boards in an elevator control system in one embodiment of the invention; and
**Fig. 4B** is a block diagram illustrating multiple alternative connections between a software update unit and computer boards in an elevator control system in one embodiment of the invention;
**Fig. 5** is a flowchart illustrating a method for elevator software updating in one embodiment of the invention.

### DETAILED DESCRIPTION OF THE EMBODIMENTS:

Reference will now be made in detail to the embodiments of the present invention, examples of which are illustrated in the accompanying drawings.

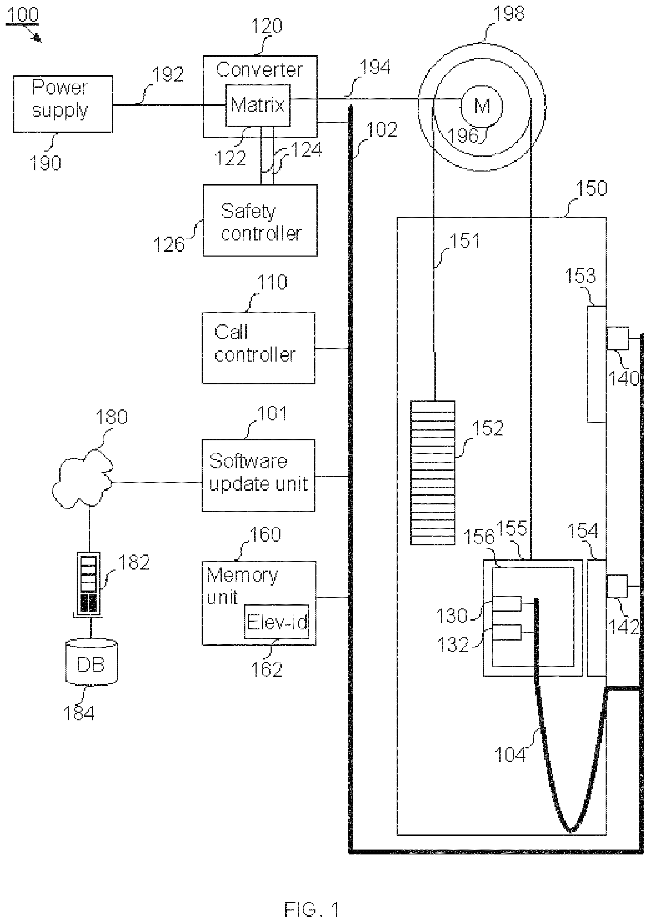

Figure 1 illustrates an elevator control system comprising a software update computer unit in one embodiment of the invention.

In Figure 1 there is illustrated an elevator 100 as an example of an elevator, the software of which is to be updated. Elevator 100 is illustrated in Figure 1 as a traction elevator, however, elevator 100 may also be a hydraulic elevator or a partly hydraulic and partly traction elevator. Elevator 100 may have an elevator shaft 150 in which an elevator car 155 and a counterweight 152 may be moved up and down. Elevator shaft 150 may have at least two landing doors such as landing door 153 and landing door 154. Traction ropes 151 or other traction means such as a traction belt may be suspended over a traction sheave 198. Torque may be applied to traction sheave 198 by an electrical motor 196, which may be supplied electrical power from a matrix 122 in a converter 120 via a power supply connection 194. Electrical power may be supplied from a power supply 190 to converter 120 via power supply connection 192. Elevator 100 may also comprise a safety controller 126 which has a duplicated safety output 124 to matrix 122 or converter 120. The safety output may be used to control converter 120 or matrix 122 in a fault situation to, for example, switch off power supply to electrical motor 196. Safety controller 126 may be communicatively connected to a plurality of safety sensors associated, for example, with elevator shaft 150 and elevator car 155. Elevator 100 comprises an elevator control system which comprises a plurality of computer boards such as, for example, converter 120, a call controller 110, a memory unit 160, a first floor control board 140, a second floor control board 142, a car operator panel 130, and a car door controller 132. The computer boards within elevator car 155 are illustrated with box 156, which is not drawn to scale. The computer boards may comprise at least one processor and a memory. The computer boards are connected to a message bus 102. Message bus 102 comprises a portion 104 which may hang from elevator car 155.

In Figure 1 there is also illustrated a software update unit 101, which is a computer unit that takes care of updating software to the computer boards in the elevator control system. In Figure 1 software update unit 101 is connected to message bus 102. Software update unit 101 may be connected to message bus 102 either directly or via a bridge (not shown). Software update unit 101 may also be removable. Software update unit 101 is communicatively connected via a network 180 to a server 182. Network 180 may comprise at least one wireless network or at least one fixed network. Software update unit 101 may have a wireless or a wired connection to network 180. Software update unit may have a wireless transceiver for communicating with network 180. Server 182 comprises a database 184.

The elevator control system may comprise the memory unit 160 which may also comprise at least one processor and at least one memory such as memory 162. In memory 162 there may be stored a unique identifier which uniquely identifies elevator 100. The unique identifier may also uniquely identify a group of elevators in which elevator 100 is comprised. The unique identifier may be stored in a similar manner in a memory associated with call controller 110 or any other computer board in the elevator control system.

The unique identifier indicates in database 184 associated with server 182 a hardware configuration of the elevator control system. The hardware configuration stores information on equipment identifiers for each computer board in the elevator control system. An equipment identifier may comprise a processor model and a memory size of a computer board. An equipment identifier may also comprise a chipset model or a model or a type of an internal message bus in a computer board. Server 182 may use the unique identifier to obtain equipment identifiers for each computer board in the elevator control system of elevator 100. By each computer board is meant each computer board considered to be part of the elevator control system. For example, certain safety critical computer boards such as safety controller 126 may not be considered part of the elevator control system. The equipment identifiers may be used by server 182 to determine which computer program versions for a specific computer board are suitable for a computer board equipped according to the equipment identifier. Database 184 stores for each computer program version information on the equipment identifiers that it is compatible with and information on computer program versions for other computer boards that is compatible with. The compatibility may have been separately tested or determined beforehand. Thus, database 184 may also store information on mutually compatible versions of computer programs for different computer boards. Software update unit 101 may transmit together with the unique identifier information on changed equipment identifiers for computer boards due to hardware upgrading or maintenance to server 182. In response, update unit 101 may receive information on mutually compatible computer program versions for each computer board. The information on the mutually compatible computer program versions may be used in software update unit 101 or computer boards with the elevator control system to retrieve the actual computer program versions from server 182 or any other source.

The embodiments of the invention described hereinbefore in association with the summary of the invention and Figure 1 may be used in any combination with each other. At least two of the embodiments may be combined together to form a further embodiment of the invention.

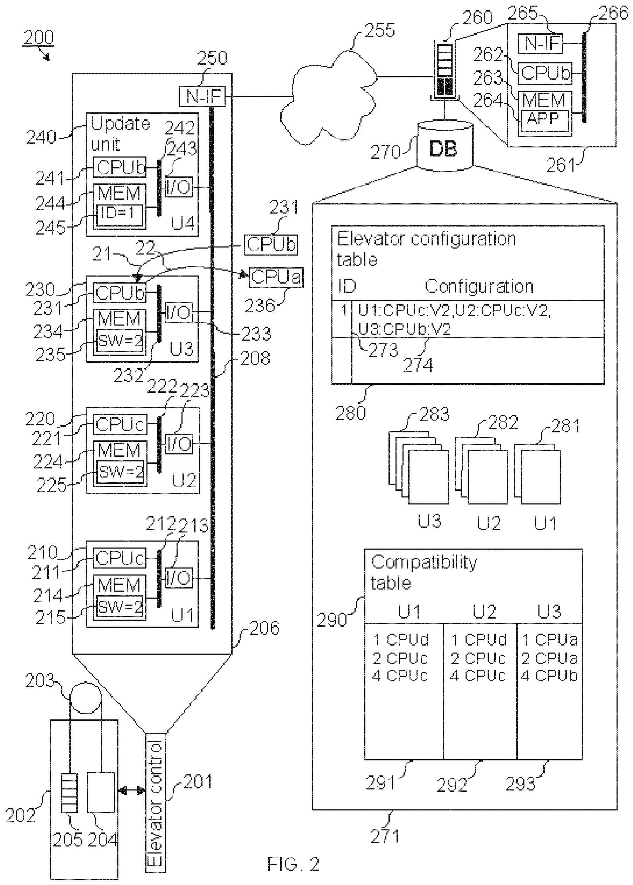

Figure 2 illustrates an elevator control system comprising a software update computer unit, which is communicatively connected with a software update server over a network in one embodiment of the invention.

In Figure 2 there is illustrated an elevator system 200. Elevator system 200 may comprise an elevator hoistway 202, an elevator car 204, a counterweight 205 and a traction sheave 203. Elevator system 200 may instead comprise a hydraulic elevator (not shown). Elevator system 200 comprises an elevator control system 201. Elevator control system 201 is configured to control functions of elevator system 200 such as, for example, elevator call control, hoisting of elevator car 204 or counterbalance 205 and elevator doors. Internal organization of elevator control system 201 is illustrated with box 206. Elevator control system comprises a plurality of computer boards connected to a message bus 208.

Elevator control system 201 comprises a first computer board 210, which comprises at least one processor 211 communicatively connected to an internal message bus 212. First computer board 210 comprises also a memory 214 communicatively connected to internal message bus 212. Memory 214 stores a computer program 215, which implements the functions performed by first computer board 210. First computer board 210 comprises also an input/output controller 213, which connects internal message bus 212 to message bus 208. Elevator control system 201 also comprises a second computer board 220, which comprises at least one processor 221 communicatively connected to an internal message bus 222. Second computer board 220 comprises also a memory 224 communicatively connected to internal message bus 222. Memory 224 stores a computer program 225, which implements the functions performed by second computer board 220. Second computer board 220 comprises also an input/output controller 223, which connects internal message bus 222 to message bus 208. Elevator control system 201 also comprises a third computer board 230, which comprises at least one processor 231 communicatively connected to an internal message bus 232. Third computer board 230 comprises also a memory 234 communicatively connected to internal message bus 232. Memory 234 stores a computer program 235, which implements the functions performed by third computer board 230. Third computer board 230 comprises also an input/output controller 233, which connects internal message bus 232 to message bus 208. Elevator control system 201 also comprises a software update unit, which is a fourth computer board 240. Fourth computer board 240 comprises an internal message bus 242 and a processor 241. Fourth computer board 240 comprises also a memory 244 communicatively connected to internal message bus 242. Fourth computer board 240 comprises also an input/output controller 243, which connects internal message bus 232 to message bus 208. In memory 244 there is stored a unique identifier 245. Unique identifier 245 may, for example, be a serial number, a character string or a binary code. Unique identifier 245 serves the purpose of identifying elevator control system 201 for server 260 and database 270. In Figure 2 the unique identifier has the value "1" selected only for illustrative purposes.

In Figure 2 software update unit 240 is illustrated to be part of elevator control system 201. However, software update unit 240 may also be removable and may be connected to elevator control system 201 using an interface such as a USB interface, an RS-232 interface or an SD-memory card interface. Software update unit 240 may be connected to message bus 208 directly or via an input/output controller. In Figure 2 there is also shown a network interface card 250, which provides an interface from elevator control system 201 to a network 260. Interface 250 may provide a wireless or a wired connection to network 260.

Communicatively connected to network 260 there is a server 262. Internal functions of server 260 are illustrated with box 261. Server 260 comprises an internal message bus 266, a network interface 265 connected to internal message bus 266, at least one processor 262 connected to internal message bus 266 and a memory 263 connected to internal message bus 266. Memory 263 stores an application 264. Server 262 has associated with it a database 270, which may be a single database or a plurality of logically associated databases. The database may also be considered to be a memory of server 262.

In Figure 2 is illustrated a case where at least one processor 236 in computer board 230 is replaced with at least one processor 231, as illustrated with arrows 21 and 22. The replacement is also referred to as upgrading. The applying of software update unit 240 does not necessarily require actual upgrading of hardware. Replacing processor 231 does not necessarily have to be newer or more powerful than processor 236 replaced. Thereupon, a signal is transmitted to software update unit 240. The signal comprises an equipment identifier of computer board 230. The equipment identifier may identify a type or a model of computer board 230. The type may be indicative of a purpose of computer board 230 in elevator control system 201. The equipment identifier may also comprise an equipment list regarding at least one of a processor type, processor speed, a memory size, a message bus model, and input/output controller type. The signal may be a message transmitted from computer board 230 indicating a current equipment identifier of computer board 230. The signal may be transmitted by computer board 230 upon powering on computer board 230 and when computer board 230 recognizes that at least one component on computer board 230 has been upgraded or otherwise changed. The equipment identifier may comprise at least one of a computer board type, a processor model, a processor identifier, a memory model, memory size, a chipset model, an internal message bus model and an internal message bus type. The ability to transmit the message from computer board 230 may require that a computer program for transmitting the current equipment identifier message to software update unit 240 is stored to memory 234. The transmitting of a message from computer board 230 may be easier for a person performing the upgrading, since the computer board 230 may automatically provide the necessary equipment identifier information and there is no need to perform error prone data entry by the person performing the upgrading maintenance.

Alternatively, the signal may be received via a user interface (not shown) associated with update unit 240. The signal including the equipment identifier may be entered by a user. The equipment identifier received may be supplemented with existing equipment information stored in memory 244 regarding computer board 230, thereby yielding a more complete equipment identifier, which is referred to as equipment identifier for simplicity. The supplementing may be necessary so that a user of software update unit 240 does not have to memorize and enter all information regarding computer board 230 via the user interface of software update unit 240.

Thereupon, software update unit 240 transmits a signal to server 260, which comprises unique identifier 245 and the current equipment identifier of computer board 230. In response to receiving the signal, server 260 conducts a search in database 270 to retrieve information on existing configuration 274 of elevator control system 201 to memory 263 in server 260. The information on existing configuration 274 is retrieved from a table 280, which stores elevator configuration information. Unique identifier 245 is used as a key 273 to retrieve the existing configuration information 274. The existing configuration information is updated with the current equipment identifier of computer board 230, thereby yielding up-to-date equipment identifiers for first computer board 210, second computer board 220 and third computer board 230.

The equipment identifier of first computer board 210 is used as a key to identify a set or a list of suitable computer program versions from a table 281, which stores information on computer program versions for first computer board 210. Similarly, the equipment identifier of second computer board 220 is used as a key to identify a set of suitable computer program versions from a table 282, which stores information on computer program versions for second computer board 220. Finally, the equipment identifier of third computer board 230 is used as a key to identify a set of suitable computer program versions from a table 283, which stores information on computer program versions for third computer board 230. The tables 281, 282 and 283 may be first identified based on a unit type or model comprised in the respective equipment identifiers of first computer board 210, second computer board 220 and third computer board 230. The set of suitable computer program versions from tables 281, 282 and 283 are filtered using computer program compatibility information stored in a computer program compatibility table 290, which identifies those computer program versions for first computer board 210, second computer board 220 and third computer board 230 that are mutually compatible. Columns 291, 292 and 293 of table 290 contain information on software versions for respectively, first computer board 210, second computer board 220 and third computer board 230. Most recent mutually compatible computer program versions for first computer board 210, second computer board 220 and third computer board 230 may be taken as a result. In Figure 2 the most recent computer programs for computer boards 210, 220 and 230 that are mutually compatible are illustrated on line 294 in compatibility table 290. Information identifying the most recent mutually compatible computer program versions is transmitted from server 260 to software update unit 240. The information identifying the most recent mutually compatible computer program versions is used by software update unit 240 to retrieve the computer program versions from server 260 or other server storing the computer program versions. The computer program versions may be downloaded from a peer-to-peer network. Software update unit 240 may receive the computer program versions from the peer-to-peer network of server 260. Software update unit 240 may transmit the downloaded computer program versions to respective first computer board 210, second computer board 220 and third computer board 230. The downloaded computer program versions may be transmitted to respective computer boards via message bus 208 or via a dedicated communication channel between software update unit 240 and the respective computer boards. To support the dedicated communication channel first computer board 210, second computer board 220 and third computer board 230 may have an interface for wired or wireless connection to software update unit 240. The interface may be, for example, a Universal System Bus (USB), RS-232, and a Secure Digital card interface. In the first computer board 210, second computer board 220 and third computer board 230 the received computer program versions may be stored to a non-volatile memory, for example, a Flash memory or an EEPROM memory.

The embodiments of the invention described hereinbefore in association with Figures 1 and 2 may be used in any combination with each other. Several of the embodiments may be combined together to form a further embodiment of the invention.

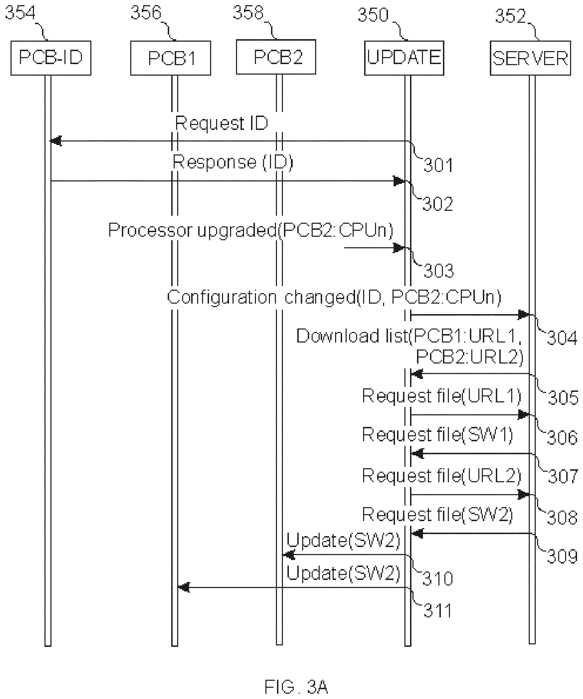

Figure 3A is a message sequence chart illustrating an updating of elevator control system software in the case of upgrading of hardware for at least one computer board, in one embodiment of the invention.

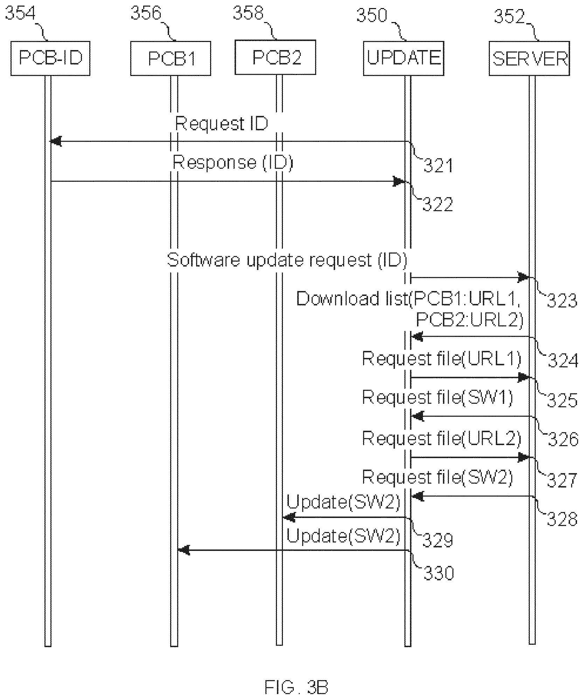

In Figure 3A there is illustrated a computer board 356 and a computer board 358 for an elevator control system (not shown). The elevator control system also comprises a computer board 354 acting as a memory to store for an elevator unique identifier. Computer board 354 may also have another purpose, for example, it may act as an elevator call controller. In Figure 3 there is also illustrated a software update unit 350, which communicates with a server 352.

The starting point in Figure 3A is that software update unit 350 requests the elevator unique identifier from computer board 354 with a signal 301. In response to the signal, computer board 354 reads the elevator unique identifier from a memory in association with computer board 354. Computer board 354 transmits the elevator unique identifier in a signal 302 to software update unit 350. Thereupon, it is assumed that a processor in computer board 358 has been upgraded. A signal 303 indicating upgrading of the processor in computer board 358 is received by software update unit 350. The signal comprises an equipment identifier of computer board 358. The equipment identifier may comprise information on the processor in computer board 358 and information on any other updated components in computer board 358. The signal may be received from a user interface of software update unit 350 and information provided in the signal may have been entered by a user. The user interface may be a separate user interface unit such as a laptop, palmtop, tablet, personal communicator, or a mobile telephone communicatively connected to software update unit 350. The user interface may also comprise a computer program or program module executing in software update unit 350. The user interface may also comprise a display and a keypad or a touch sensitive display. In response to receiving signal 303, software update unit 350 extracts the equipment identifier from signal 303. Thereupon, software update unit 350 transmits a signal 304 comprising the equipment identifier, information indicating the computer board having the equipment identifier, that is, computer board 358, and the elevator unique identifier to the server 352. Server 352 uses the elevator unique identifier as a key to find from a memory associated with server 352 previously stored hardware configuration information of the elevator identified with the elevator unique identifier. The previously stored hardware configuration information is updated with the equipment identifier on the part of the computer board indicated in signal 304. The updated hardware configuration information has for a predefined plurality of computer boards the respective current equipment identifiers. Server 352 uses the updated hardware configuration information to find software versions for the plurality of computer boards. The plurality of computer boards may be determined in signal 304 or it may be determined based on information indicating the computer board having the equipment identifier in server 352. Server 352 finds, from the memory associated with server 352, computer program versions for each computer board in the plurality of computer boards that are compatible with the current equipment identifier of the computer board. Server 352 also determines from computer program dependency information stored in the memory associated with server 352 which computer program versions regarding each of the plurality of computer boards are indicated in the memory as mutually compatible. Thus, server 352 obtains from the memory information indicating mutually compatible computer program versions for each of the plurality of computer boards. Server 352 may also select most recent mutually compatible computer program versions for each of the plurality of computer boards. Server 352 transmits a signal 305 which comprises information of the most recent mutually compatible computer program versions for each of the plurality of computer boards. The signal may also be seen as a download list, which identifies a plurality of computer programs and a version number of each computer program. Thereupon, software update unit 350 retrieves each computer program version provided in signal 305. In signal 306 software update unit 350 indicates an identifier such as Uniform Resource Locator (URL) comprising information of a specific computer program version for a specific computer board to server 352. Server 352 provides in signal 307 the computer program version to software update unit 350. Similarly, in signal 308 software update unit 350 indicates an identifier such as Uniform Resource Locator (URL) comprising information of a specific computer program version for a specific computer board to server 352. Server 352 provides in signal 309 the computer program version to software update unit 350. Software update unit 350 transmits the received computer program versions to processor boards 356 and 358 in respective signals 310 and 311. In response, processor boards 356 and 358 store the computer program versions in their respective memories, which may be non-volatile memories.

Figure 3B is a message sequence chart illustrating an updating of elevator control system software in one embodiment of the invention. In the case of Figure 3B hardware in the elevator control system is not upgraded or modified.

In Figure 3B there is illustrated a computer board 356 and a computer board 358 for an elevator control system (not shown). The elevator control system also comprises a computer board 354 acting as a memory to store for an elevator unique identifier. Computer board 354 may also have another purpose, for example, it may act as an elevator call controller. In Figure 3 there is also illustrated a software update unit 350, which communicates with a server 352.

The starting point in Figure 3B is that software update unit 350 requests the elevator unique identifier from computer board 354 with a signal 321. In response to the signal, computer board 354 reads the elevator unique identifier from a memory in association with computer board 354. Computer board 354 transmits the elevator unique identifier in a signal 322 to software update unit 350. However, in one embodiment of the invention, the elevator unique identifier may also be entered by a user of software update unit 350 manually via a user interface of software update unit 350.

Thereupon, it is assumed that a new computer program, that is, software version is to be installed on processor board 356, for example, due to an identified program error or fault. The installation process may be initiated by a serviceman via a user interface of software update unit 350. The serviceman may enter a request to download most recent version of the computer program for processor board 356. The computer program may comprise all computer executable instructions needed for processor board 356 to perform necessary functions as part of an elevator control system. The computer program may comprise, for example, the operating system and/or at least one application implementing the functions performed by processor board in elevator control system such as elevator control system 201 illustrated in Figure 2. By operating system may be meant, for example, at least one input/output control related routine. There does not necessarily have to be a multitasking operating system. The user interface may be a separate user interface unit such as a laptop, palmtop, tablet, personal communicator, or a mobile telephone communicatively connected to software update unit 350. The user interface may also comprise a computer program or program module executing in software update unit 350. The user interface may also comprise a display and a keypad or a touch sensitive display. Thereupon, software update unit 350 transmits a signal 323 comprising the elevator unique identifier to the server 352. Signal 323 may also comprise an indication that at least one computer program is to be downloaded and, optionally, an indication of at least one the computer board for which a computer program is to be downloaded. In signal 323 there may be also comprised information that is used to identify a version of the computer program to be downloaded, for example, whether a most recent computer program is to be downloaded. Server 352 uses the elevator unique identifier as a key to find from a memory associated with server 352 previously stored hardware configuration information of the elevator identified with the elevator unique identifier. The previously stored hardware configuration information may be updated with information on any new hardware, if such information is provided in signal 323 from software update unit 350. The hardware configuration information stored in the memory of server 352 may comprise information on computer boards in the elevator control system identified with the unique identifier. The information on the computer boards may comprise information that is pertinent for selecting software. The information may comprise a unit type of the computer board, for example, indicating a purpose of the computer board, and information used to select specific software versions among a plurality of software versions for the unit type. The software versions may be arranged as a list where list items indicate the hardware requirements, for example, processor and memory requirements. In the case of Figure 3B, the hardware configuration information comprises information on computer boards 354, 356 and 358. The information may be used, for each computer board, to identify in server 352 a computer program or a list of computer programs for the computer board in question. Thus, server 352 uses current hardware configuration information to find software, that is, computer program versions for the plurality of computer boards in the elevator control system. Server 352 finds, from the memory associated with server 352, computer program versions for each computer board in the plurality of computer boards that are compatible with the current equipment of the computer board, for example, based on an equipment identifier. Server 352 also determines from computer program dependency information stored in the memory associated with server 352 which computer program versions regarding each of the plurality of computer boards are indicated in the memory as mutually compatible. Thus, server 352 obtains from the memory information indicating computer program versions for each of the plurality of computer boards so that the computer program versions are mutually compatible. Server 352 selects, for example, starting from a desired computer program version for a specific computer board, the computer program versions for the other computer boards that are compatible with the desired computer program version. The desired computer program version may be the most recent or a version identified by a user of software update unit 350. Server 352 transmits a signal 324 which comprises information of the computer program versions for each of the plurality of computer boards. The computer program versions are assumed to be mutually compatible so that the computer boards function correctly in the elevator control system. Signal 324 may also be seen as a download list, which identifies a plurality of computer programs and a version number of each computer program. Thereupon, software update unit 350 retrieves each computer program version provided in signal 324. In signal 325 software update unit 350 indicates an identifier such as Uniform Resource Locator (URL) comprising information of a specific computer program version for a specific computer board to server 352. Server 352 provides in signal 326 the computer program version to software update unit 350. Similarly, in signal 327 software update unit 350 indicates an identifier such as Uniform Resource Locator (URL) comprising information of a specific computer program version for a specific computer board to server 352. Server 352 provides in signal 328 the computer program version to software update unit 350. Software update unit 350 transmits the received computer program versions to processor boards 356 and 358 in respective signals 329 and 330. In response, processor boards 356 and 358 may store the computer program versions in their respective memories, which may be non-volatile memories such as flash memories. The flash memories may be used during booting of the respective computer boards to load the executable image to the random access memories of the respective computer boards.

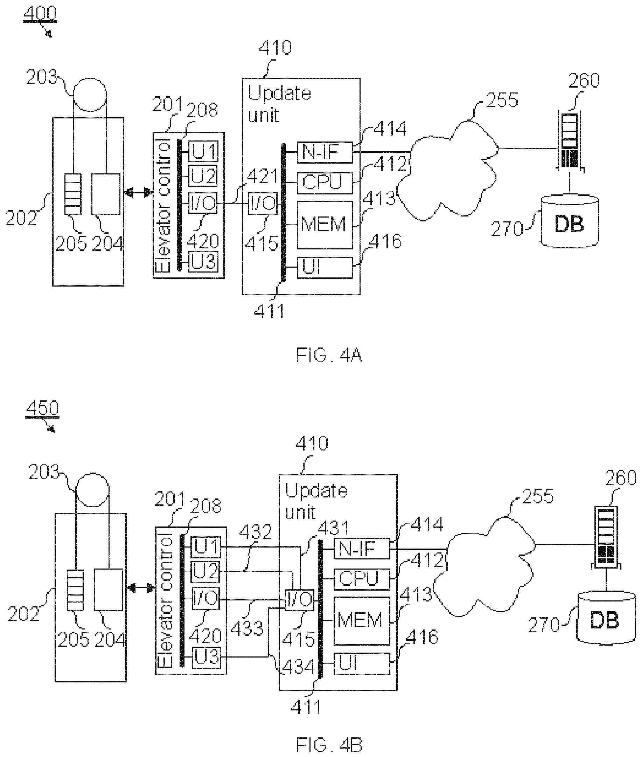

Figure 4A is a block diagram illustrating a single shared connection between a software update unit and computer boards in an elevator control system in one embodiment of the invention.

In Figure 4A there is illustrated an elevator control system 201 for an elevator 400. The elevator control system comprises a plurality of computer boards such as computer boards U1, U2 and U3 connected to a shared message bus 208. Computer boards U1, U2 and U3 may be similar to respective computer boards 210, 220 and 230 illustrated in Figure 2. The elevator 400 is illustrated as a traction elevator comprising an elevator hoistway 202, a traction sheave 203, a counterweight 205 and an elevator car 204. The elevator may also be a hydraulic elevator for the purposes of the invention.

Elevator control system 201 is communicatively connected to a software update unit 410 via an interface 421. Elevator control system 201 may also comprise an input/output controller 420 which may be used to communicatively connect elevator control system 201 to software update unit 410 via interface 421. Software update unit 410 may be similar to software update unit 350 described in association with the description of Figure 3. Software update unit 410 comprises at least one processor 412, a memory 413, an internal bus 411 and a user interface 416. User interface 416 may comprise at least one of a display, at least one Light Emitting Diode (LED), a keypad, a touch sensitive display and a pointer device. Software update unit 410 also comprises a network interface 414 to connect to a network 255, to which is connected a server 260 and a database in association with server 270.

Software update unit 410 is configured to transmit information regarding hardware configuration for at least one computer board in elevator control system 201 to server 260. The transmitted information comprises information on at least one upgraded computer board and may comprise information on at least one non-upgraded computer board. The hardware configuration may comprise for a specific computer board among the at least one computer board an identifier or a model of at least one processor in the specific computer board. The hardware configuration may also comprise information regarding a memory in the specific computer board. The hardware configuration may also comprise information regarding a chipset in the specific computer board. The information regarding the hardware configuration may be stored in memory 413. It may have been stored in memory 413 in response to information entered by user of software update unit 410 via user interface 416.

Software update unit 410 may also comprise an input/output controller 415, which is used to communicatively connect software update unit 410 to elevator control system 201. Interface 421 may be a serial or a parallel interface. Interface 421 may provide a wireless or wired connection between software update unit 410 and elevator control system 201. Interface 421 may be, for example, a Universal System Bus (USB) such as USB 3.0, an RS-232 interface or a Secure Digital (SD) card interface. Software update unit 410 receives a plurality of mutually compatible computer program versions from a remote network node, in response to an earlier transmission, from software update unit 410, comprising information regarding hardware configuration of at least one computer board in elevator control system 201. Each of the plurality of mutually compatible computer program versions is targeted for a specific computer board in elevator control system 201. Software update unit 410 uses interface 421 to transmit the received mutually compatible computer program versions to the plurality of processor boards in the elevator control system 201. Input/output controller 420 may route or switch the received mutually compatible computer program versions to their respective correct recipient computer boards, based on recipient information provided by software update unit 410. User interface 416 of software update unit 410 may be configured to display information on the progress and status of software transmission to the plurality of processor boards in the elevator control system 201.

Figure 4B is a block diagram illustrating multiple alternative connections between a software update unit and computer boards in an elevator control system in one embodiment of the invention.

In Figure 4B software update unit 410 of Figure 4A is modified so that software update unit may have at least one interface directly to a computer board in elevator control system 201. In Figure 4B software update unit 410 is illustrated to have interfaces 431, 432, 433 and 434. The number of interface is just for illustrative purposes and understanding of the invention. There may be as well one or two interfaces in addition to interface 433. Interface 433 may correspond to interface 421 described in association with the description of Figure 4A. Interfaces 431, 432 and 434 connect software update unit 410 directly to respective computer boards U1, U2 and U3. Interfaces 431, 432 and 434 may be used by software update unit 410 to transmit computer programs dedicated for specific computer boards to the respective computer board directly. The transmission of a computer program for a specific computer board via one of interfaces 431, 432 and 434 may be initiated by a user of software update unit 410, for example, after a display of software update unit indicates that a connection between software update unit 410 and the specific computer board has been set up via the interface. This may involve an installation of a cable between the specific computer board and the software update unit 410. Interfaces 431, 432 and 434 may not be connected simultaneously between elevator control system 201 and software update unit 410. For example, at least one interface cable connected to software update unit 410 from one end may be switched in turn between different computer boards. While the cable is connected from the other end to a specific computer card, the computer program for the specific computer card may be transmitted from software update unit 410 to the specific computer card.

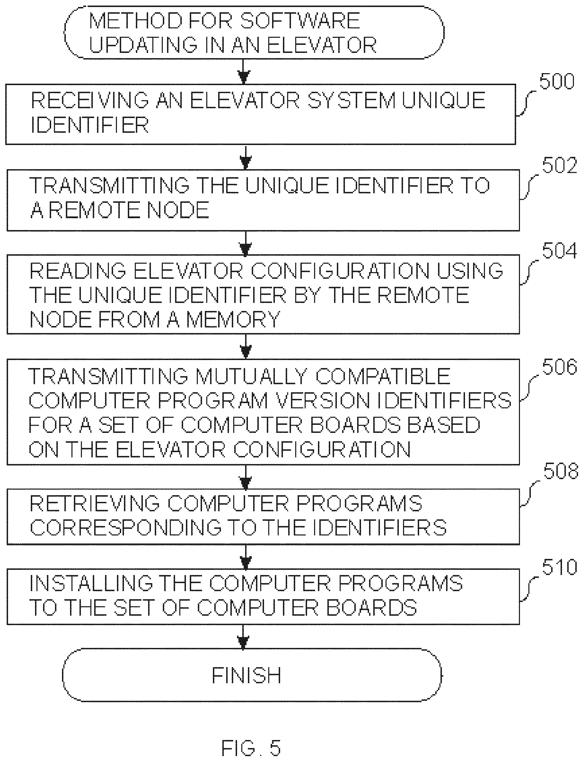

Figure 5 is a flowchart illustrating a method for elevator software updating in one embodiment of the invention.

At step 500 an elevator control system unique identifier is received by a software update computer unit, that is, software update unit. The unique identifier may be entered by a user of the software update unit or node communicatively connectable to the elevator control system. The unique identifier may also be read from a memory in association with the elevator control system, for example, from a memory of a computer board in the elevator control system.

In one embodiment of the invention, the software update unit may receive information of an upgraded computer board in the elevator control system. The information may be received from a user of the software update unit via a user interface of the software update unit. The information of the upgraded computer board may be used to construct an equipment identifier for the upgraded computer board.

In one embodiment of the invention, the equipment identifier may be a record or an inventory specifying at least one property of the computer board relevant for software such as at least one of a processor model, processor identifier, a memory size on the computer board, a chipset model, a chipset identifier, a message bus model and a message bus identifier.

At step 502 the unique identifier is transmitted to a remote node such as a server. The information may be transmitted from the software update unit. The software update unit may also transmit information of an upgraded computer board to the remote node. The information of the upgraded computer board may be the equipment identifier.

At step 504 the remote node reads elevator configuration information from a memory of the remote node using the unique identifier as a key. The memory may be a database or a distributed hash table.

In one embodiment of the invention, if a computer board has been upgraded and information of the upgrade has been transmitted to the remote node, the remote node may update the elevator configuration information with the information of the upgraded computer board. For example, an old equipment identifier of the upgraded computer board may be updated with the equipment identifier transmitted to the remote node.

At step 506 the remote node obtains information of mutually compatible computer program versions for a set of computer boards in the elevator control system based on the elevator configuration information from the memory of the remote node. The elevator configuration information may have been updated by the remote node in response to the information of a computer board upgrade from the software update unit. The remote node transmits the information of the mutually compatible computer program versions for the set of computer boards to the elevator control system. The information of the mutually compatible computer program versions may comprise, for each computer board in the set of computer boards, a computer program version for the computer board in question. A computer programs for a computer board may be specific for the computer board.

At step 508, upon receiving the information of the mutually compatible computer program versions for the set of computer boards, by the software update unit, the software update unit uses the information of the mutually compatible computer program versions to download the mutually compatible computer program versions. The software update unit may construct, from the version identifiers in the information of the mutually compatible computer program versions, file names or file identifiers which may be used to retrieve the actual computer programs to the software update unit. The software update unit may also use the version identifiers directly as file identifiers or file names. The actual computer programs may be retrieved from a memory association with the remote node or they may be retrieved from a peer-to-peer file downloading system.

At step 510, the retrieved computer programs are installed to their respective computer boards by the software update unit.

Thereupon, the method is finished. The method steps may be performed in the order of the numbering of the steps.

The embodiments of the invention described hereinbefore in association with Figures 1, 2, 3, 4A, 4B and 5 or the summary of the invention may be used in any combination with each other. Several of the embodiments may be combined together to form a further embodiment of the invention.

The exemplary embodiments of the invention can be included within any suitable device, for example, including any suitable servers, workstations, PCs, laptop computers, PDAs, Internet appliances, handheld devices, cellular telephones, wireless devices, other devices, and the like, capable of performing the processes of the exemplary embodiments, and which can communicate via one or more interface mechanisms, including, for example, Internet access, telecommunications in any suitable form (for instance, voice, modem, and the like), wireless communications media, one or more wireless communications networks, cellular communications networks, 3G communications networks, 4G communications networks, Long-Term Evolution (LTE) networks, Public Switched Telephone Network (PSTNs), Packet Data Networks (PDNs), the Internet, intranets, a combination thereof, and the like.

It is to be understood that the exemplary embodiments are for exemplary purposes, as many variations of the specific hardware used to implement the exemplary embodiments are possible, as will be appreciated by those skilled in the hardware art(s). For example, the functionality of one or more of the components of the exemplary embodiments can be implemented via one or more hardware devices, or one or more software entities such as modules.

The exemplary embodiments can store information relating to various processes described herein. This information can be stored in one or more memories, such as a hard disk, optical disk, magneto-optical disk, RAM, and the like. One or more databases can store the information regarding cyclic prefixes used and the delay spreads measured. The databases can be organized using data structures (e.g., records, tables, arrays, fields, graphs, trees, lists, and the like) included in one or more memories or storage devices listed herein. The processes described with respect to the exemplary embodiments can include appropriate data structures for storing data collected and/or generated by the processes of the devices and subsystems of the exemplary embodiments in one or more databases.

All or a portion of the exemplary embodiments can be implemented by the preparation of one or more application-specific integrated circuits or by interconnecting an appropriate network of conventional component circuits, as will be appreciated by those skilled in the electrical art(s).

As stated above, the components of the exemplary embodiments can include computer readable medium or memories according to the teachings of the present inventions and for holding data structures, tables, records, and/or other data described herein. Computer readable medium can include any suitable medium that participates in providing instructions to a processor for execution. Such a medium can take many forms, including but not limited to, non-volatile media, volatile media, transmission media, and the like. Non-volatile media can include, for example, optical or magnetic disks, magneto-optical disks, and the like. Volatile media can include dynamic memories, and the like. Transmission media can include coaxial cables, copper wire, fiber optics, and the like. Transmission media also can take the form of acoustic, optical, electromagnetic waves, and the like, such as those generated during radio frequency (RF) communications, infrared (IR) data communications, and the like. Common forms of computer-readable media can include, for example, a floppy disk, a flexible disk, hard disk, magnetic tape, any other suitable magnetic medium, a CD-ROM, CDRW, DVD, any other suitable optical medium, punch cards, paper tape, optical mark sheets, any other suitable physical medium with patterns of holes or other optically recognizable indicia, a RAM, a PROM, an EPROM, a FLASH-EPROM, any other suitable memory chip or cartridge, a carrier wave or any other suitable medium from which a computer can read.

## Claims

1. A method, comprising:
receiving (500), by a software update computer unit (101, 240), a unique identifier (162, 245) of an elevator control system (201), wherein the elevator control system comprises at least three computer boards (210, 220, 230), each computer board comprising a memory (214, 224, 234) and at least one processor (211, 221, 231);
transmitting (502), by the software update computer unit, the received unique identifier to a server (182, 260) over a network (180, 255);
retrieving (504) information of a current hardware configuration (274) of the elevator control system using the unique identifier from a memory (184, 270) associated with the server;
determining (504), by the server, equipment identifiers (U1, U2, U3) from the current hardware configuration information for the at least three computer boards;
finding, by the server from the memory associated with the server, at least three computer program version lists (281, 282, 283), respectively, for the at least three computer boards based on the determined equipment identifiers of the at least three computer boards;
selecting, by the server, a list among the at least three computer program version lists;
selecting, by the server, a computer program version from the selected list;
determining, by the server, which of the computer program versions in the at least two remaining computer program version lists are compatible with the computer program version selected based on predetermined computer program version compatibility information (290) stored in the memory associated with the server, thereby yielding information that identifies computer programs for the at least three computer boards, the identified computer programs being mutually compatible;
transmitting (506) the information identifying the computer programs for the at least three computer boards to the software update computer unit;
retrieving (508) at least one computer program of the identified computer programs for the at least three computer boards into the software update computer unit using the information identifying the computer programs for the at least three computer boards; and
installing (510) the at least one retrieved computer program in the respective computer board by the software update computer unit.

2. The method according to claim 1, wherein the list selected by the server, among the at least three computer program version lists, is selected based on a predefined order between the at least three computer program version lists.

3. The method according to claim 1 or claim 2, wherein the computer program version selected by the server is a latest version.

4. The method according to claim 1, wherein the list selected by the server, among the at least three computer program version lists, is selected based on an equipment identifier transmitted to the server, from the software update computer unit, and the computer program version selected by the server is selected based on a computer program version identifier transmitted to the server from software update computer unit.

5. The method according to claim 1, wherein the method further comprises:
transmitting, from the server, the at least three computer program version lists to the software update computer unit;
presenting at least one of the at least three computer program version lists on a user interface of the software update computer unit;
receiving via the user interface user input that causes the server to select the selected list and to select the computer program version selected; and
transmitting the user input to the server.

6. The method according to claim 1, wherein the method further comprises:
receiving, by the software update computer unit, at least one signal indicating an upgrading of a computer board with at least one new component, the upgraded computer board being among the at least three computer boards, at least two computer boards among the at least three computer boards remaining non-upgraded;
deriving an equipment identifier of the upgraded computer board, based on information in the at least one signal indicating the upgrading of the upgraded computer board;
transmitting, by the software update computer unit, the equipment identifier of the upgraded computer board to the server over the network; and
in response to the determining of the equipment identifiers from the current hardware configuration, replacing a determined equipment identifier of the upgraded computer board with the equipment identifier transmitted to the server to obtain an updated current hardware configuration.

7. The method according to claim 6, wherein the at least one new component comprises at least one of a processor, a memory module, a chipset, a message bus and an input/output controller.

8. The method according to claim 6, wherein the equipment identifier comprises at least one of a processor model, a processor type, memory size of the computer board, a chipset model or type and a message bus model or type.

9. The method according to claim 6, wherein the step of receiving the at least one signal indicating the upgrading of the computer board with the at least one new component comprises:
receiving the at least one signal from a user interface communicatively connected with the software update computer unit, the at least one signal comprising information indicating at least, whether the at least one new component comprises a processor or a memory, and an identifier of the new component.

10. The method according to claim 9, wherein the at least one signal is entered by a user via the user interface.

11. The method according to claim 6, wherein the step of receiving the at least one signal indicating the upgrading of the computer board with the at least one new component comprises:
powering on the upgraded computer board; and
transmitting the at least one signal indicating the upgrading of the computer board from the upgraded computer board, in response to the powering on.

12. The method according to any of the claims 1 - 11, wherein the unique identifier of an elevator system is transmitted from a memory associated with the elevator system to the software update computer unit.

13. The method according to any of the claims 1 - 12, wherein the unique identifier is transmitted to the software update computer unit from a user interface associated with the software update computer unit.

14. The method according to any of the claims 1 - 13, wherein the mutually compatible computer program versions are retrieved to the software update computer unit from a peer-to-peer file distribution system or a distributed hash table.

15. The method according to any of the claims 1 - 14, wherein the at least three computer boards are connected to a shared message bus.

16. The method according to claim 15, the method further comprising:
connecting the software update computer unit to the shared message bus.

17. The method according to claim 1, the step of installing the at least one retrieved computer program in the respective computer board, further comprises:
receiving, by the software update computer unit, a signal indicating a presence of a connection between the software update computer unit and a connected computer board among the at least three computer boards; and
installing a retrieved computer program for the connected computer board, the retrieved computer program being among the at least one retrieved computer program.

18. An apparatus (101, 240) comprising at least one processor (241) and at least one memory (244) including computer program code, the at least one memory and the computer program code configured to, with the at least one processor, cause the apparatus at least to perform:
receiving (500), by the apparatus, a unique identifier (162, 245) of an elevator control system (201), wherein the elevator control system comprises at least three computer boards (210, 220, 230) each computer board comprising a memory (214, 224, 234) and at least one processor (211, 221, 231);
transmitting (502), by the apparatus, the received unique identifier to a server (182, 260) over a network (180, 255), the server storing a current hardware configuration (274) of the elevator control system associated with the unique identifier in a memory (184, 270) associated with the server, the current hardware configuration comprising equipment identifiers (U1, U2, U3) for the at least three computer boards, the server storing information on computer program versions (281, 282, 283) available for the at least three computer boards identified with the equipment identifiers, the server also storing information on mutual compatibility of the computer program versions (290) available for the plurality of computer boards;
receiving (506) information identifying computer programs for the at least three computer boards, the identified computer programs being mutually compatible;
retrieving (508) at least one computer program of the identified computer programs for the at least three computer boards using the information identifying the computer programs for the at least three computer boards; and
installing (510) the at least one retrieved computer program in the respective computer board.

19. A system, comprising the apparatus according to claim 18 and a server configured to store a current hardware configuration of the elevator system associated with the unique identifier in a memory associated with the server, to store information on computer program versions available for a plurality of computer boards identified with an equipment identifier, and to store information on mutual compatibility of the computer program versions available for the plurality of computer boards.

20. A computer program comprising code adapted to cause the following when executed on a data-processing system:
receiving (500), by a software update computer unit (101, 240), a unique identifier (162, 245) of an elevator control system (201), wherein the elevator control system comprises at least three computer boards (210, 220, 230) each computer board comprising a memory (214, 224, 234) and at least one processor (211, 221, 231);
transmitting (502), by the software update computer unit, the received unique identifier to a server (182, 260) over a network (180, 255), the server storing a current hardware configuration (274) of the elevator control system associated with the unique identifier in a memory (184, 270) associated with the server, the current hardware configuration comprising equipment identifiers (U1, U2, U3) for the at least three computer boards, the server storing information on computer program versions (281, 282, 283) available for the at least three computer boards identified with the equipment identifiers, the server also storing information on mutual compatibility of the computer program versions (290) available for the plurality of computer boards;
receiving (506) information identifying computer programs for the at least three computer boards to the software update computer unit, the identified computer programs being mutually compatible;
retrieving (508) at least one computer program of the identified computer programs for the at least three computer boards into the software update computer unit using the information identifying the computer programs for the at least three computer boards; and
installing (510) the at least one retrieved computer program in the respective computer board by the software update computer unit.

21. The computer program according to claim 20, wherein said computer program is stored on a non-transitory computer readable medium.

## Patentansprüche

1. Verfahren, umfassend:
Empfangen (500) eines eindeutigen Identifikators (162, 245) eines Aufzugssteuerungssystems (201) durch eine Softwareaktualisierungscomputereinheit (101, 240), wobei das Aufzugssteuerungssystem zumindest drei Computerplatinen (210, 220, 230) umfasst, wobei jede Computerplatine einen Speicher (214, 224, 234) und zumindest einen Prozessor (211, 221, 231) umfasst;
Übertragen (502) des empfangenen eindeutigen Identifikators an einen Server (182, 260) durch die Softwareaktualisierungscomputereinheit, über ein Netzwerk (180, 255);
Abrufen (504) von Informationen über eine aktuelle Hardwarekonfiguration (274) des Aufzugssteuerungssystems unter Verwendung des eindeutigen Identifikators aus einem dem Server zugeordneten Speicher (184, 270);
Bestimmen (504) von Ausrüstungsidentifikatoren (U1, U2, U3) aus den aktuellen Hardwarekonfigurationsinformationen für die zumindest drei Computerplatinen durch den Server;
Finden, durch den Server, aus dem dem Server zugeordneten Speicher, von jeweils zumindest drei Computerprogrammversionslisten (281, 282, 283), für die zumindest drei Computerplatinen basierend auf den bestimmten Ausrüstungsidentifikatoren der zumindest drei Computerplatinen;
Auswählen, durch den Server, einer Liste unter den zumindest drei Computerprogrammversionslisten;
Auswählen, durch den Server, einer Computerprogrammversion aus der ausgewählten Liste;
Bestimmen, durch den Server, welche der Computerprogrammversionen in den zumindest zwei verbleibenden Computerprogrammversionslisten mit der Computerprogrammversion kompatibel sind, die ausgewählt wurde basierend auf vorherbestimmten Computerprogrammversionskompatibilitätsinformationen (290), die in dem dem Server zugeordneten Speicher gespeichert sind, wodurch Informationen erhalten werden, die Computerprogramme für die zumindest drei Computerplatinen identifizieren, wobei die identifizierten Computerprogramme wechselseitig kompatibel sind;
Übertragen (506) der Informationen, die die Computerprogramme für die zumindest drei Computerplatinen identifizieren, an die Softwareaktualisierungscomputereinheit;
Abrufen (508) zumindest eines Computerprogramms der identifizierten Computerprogramme für die zumindest drei Computerplatinen in die Softwareaktualisierungscomputereinheit unter Verwendung der Informationen, die die Computerprogramme für die zumindest drei Computerplatinen identifizieren; und
Installieren (510) des zumindest einen abgerufenen Computerprogramms in der jeweiligen Computerplatine durch die Softwareaktualisierungscomputereinheit.

2. Verfahren nach Anspruch 1, wobei die vom Server ausgewählte Liste unter den zumindest drei Computerprogrammversionslisten basierend auf einer vordefinierten Reihenfolge zwischen den zumindest drei Computerprogrammversionslisten ausgewählt wird.

3. Verfahren nach Anspruch 1 oder Anspruch 2, wobei die vom Server ausgewählte Computerprogrammversion eine neueste Version ist.

4. Verfahren nach Anspruch 1, wobei die vom Server ausgewählte Liste unter den zumindest drei Computerprogrammversionslisten wird basierend auf einem Ausrüstungsidentifikator ausgewählt, der von der Softwareaktualisierungscomputereinheit an den Server übertragen wird, und die vom Server ausgewählte Computerprogrammversion basierend auf einem Computerprogrammversionsidentifikator ausgewählt wird, der von der Softwareaktualisierungscomputereinheit an den Server übertragen wird.

5. Verfahren nach Anspruch 1, wobei das Verfahren ferner umfasst:
Übertragen der zumindest drei Computerprogrammversionslisten vom Server an die Softwareaktualisierungscomputereinheit;
Präsentieren zumindest einer der zumindest drei Computerprogrammversionslisten auf einer Benutzeroberfläche der Softwareaktualisierungscomputereinheit;
Empfangen über die Benutzeroberfläche von Benutzereingaben, die den Server veranlassen, die ausgewählte Liste auszuwählen und die ausgewählte Computerprogrammversion auszuwählen; und
Übertragen der Benutzereingaben an den Server.

6. Verfahren nach Anspruch 1, wobei das Verfahren ferner umfasst:
Empfangen, zumindest eines Signals durch die Softwareaktualisierungscomputereinheit, das eine Aufrüstung einer Computerplatine mit zumindest einer neuen Komponente anzeigt, wobei die aufgerüstete Computerplatine eine von den zumindest drei Computerplatinen ist, wobei zumindest zwei Computerplatinen von den zumindest drei Computerplatinen unaufgerüstet bleiben;
Ableiten eines Ausrüstungsidentifikators der aufgerüsteten Computerplatine, basierend auf Informationen in dem zumindest einen Signal, das die Aufrüstung der aufgerüsteten Computerplatine anzeigt;
Übertragen, durch die Softwareaktualisierungscomputereinheit, des Ausrüstungsidentifikators der aufgerüsteten Computerplatine an den Server über das Netzwerk; und
in Antwort auf das Bestimmen der Ausrüstungsidentifikatoren aus der aktuellen Hardwarekonfiguration, Ersetzen eines bestimmten Ausrüstungsidentifikators der aufgerüsteten Computerplatine durch den an den Server übertragenen Ausrüstungsidentifikator, um eine aktualisierte aktuelle Hardwarekonfiguration zu erhalten.

7. Verfahren nach Anspruch 6, wobei die zumindest eine neue Komponente zumindest einen von einem Prozessor, einem Speichermodul, einem Chipsatz, einem Nachrichtenbus und einer Eingabe-/Ausgabesteuereinheit umfasst.

8. Verfahren nach Anspruch 6, wobei der Ausrüstungsidentifikator zumindest eines von einem Prozessormodell, einem Prozessortyp, einer Speichergröße der Computerplatine, einem Chipsatzmodell oder -typ und einem Nachrichtenbusmodell oder -typ umfasst.

9. Verfahren nach Anspruch 6, wobei der Schritt des Empfangens des zumindest einen Signals, das die Aufrüstung der Computerplatine mit der zumindest einen neuen Komponente anzeigt, umfasst:
Empfangen des zumindest einen Signals von einer Benutzeroberfläche, die mit der Softwareaktualisierungscomputereinheit kommunikativ verbunden ist, wobei das zumindest eine Signal Informationen, zumindest anzeigend, ob die zumindest eine neue Komponente einen Prozessor oder einen Speicher umfasst, und einen Identifikator der neuen Komponente umfasst.

10. Verfahren nach Anspruch 9, wobei das zumindest eine Signal durch einen Benutzer über die Benutzeroberfläche eingegeben wird.

11. Verfahren nach Anspruch 6, wobei der Schritt des Empfangens des zumindest einen Signals, das das Aufrüsten der Computerplatine mit der zumindest einen neuen Komponente anzeigt, umfasst:
Einschalten der aufgerüsteten Computerplatine; und
Übertragen des zumindest einen Signals, das die Aufrüstung der Computerplatine anzeigt, von der aufgerüsteten Computerplatine in Antwort auf das Einschalten.

12. Verfahren nach einem der Ansprüche 1 bis 11, wobei der eindeutige Identifikator eines Aufzugssystems von einem dem Aufzugssystem zugeordneten Speicher an die Softwareaktualisierungscomputereinheit übertragen wird.

13. Verfahren nach einem der Ansprüche 1 bis 12, wobei der eindeutige Identifikator von einer der Softwareaktualisierungscomputereinheit zugeordneten Benutzeroberfläche an die Softwareaktualisierungscomputereinheit übertragen wird.

14. Verfahren nach einem der Ansprüche 1 bis 13, wobei die wechselseitig kompatiblen Computerprogrammversionen aus einem Peer-to-Peer-Dateiverteilungssystem oder einer verteilten Hash-Tabelle in die Softwareaktualisierungscomputereinheit abgerufen werden.

15. Verfahren nach einem der Ansprüche 1 bis 14, wobei die zumindest drei Computerplatinen mit einem geteilten Nachrichtenbus verbunden sind.

16. Verfahren nach Anspruch 15, wobei das Verfahren ferner umfasst:
Verbinden der Softwareaktualisierungscomputereinheit mit dem geteilten Nachrichtenbus.

17. Verfahren nach Anspruch 1, wobei der Schritt des Installierens des zumindest einen abgerufenen Computerprogramms der jeweiligen Computerplatine ferner umfasst:
Empfangen eines Signals durch die Softwareaktualisierungscomputereinheit, das ein Vorhandensein einer Verbindung zwischen der Softwareaktualisierungscomputereinheit und einer verbundenen Computerplatine unter den zumindest drei Computerplatinen anzeigt; und
Installieren eines abgerufenen Computerprogramms für die verbundene Computerplatine, wobei das abgerufene Computerprogramm eines des zumindest einen abgerufenen Computerprogramms ist.

18. Vorrichtung (101, 240), umfassend zumindest einen Prozessor (241) und zumindest einen Speicher (244) mit einem Computerprogrammcode, wobei der zumindest eine Speicher und der Computerprogrammcode dazu eingerichtet sind, mit dem zumindest einen Prozessor die Vorrichtung zu veranlassen, zumindest durchzuführen:
Empfangen (500) eines eindeutigen Identifikators (162, 245) eines Aufzugssteuerungssystems (201) durch die Vorrichtung, wobei das Aufzugssteuerungssystem zumindest drei Computerplatinen (210, 220, 230) umfasst, wobei jede Computerplatine einen Speicher (214, 224, 234) und zumindest einen Prozessor (211, 221, 231) umfasst;
Übertragen (502) des empfangenen eindeutigen Identifikators durch die Vorrichtung an einen Server (182, 260) über ein Netzwerk (180, 255), wobei der Server eine aktuelle Hardwarekonfiguration (274) des dem eindeutigen Identifikator (184, 270) zugeordneten Aufzugssteuerungssystems in einem dem Server zugeordneten Speicher speichert, wobei die aktuelle Hardwarekonfiguration Ausrüstungsidentifikatoren (U1, U2, U3) für die zumindest drei Computerplatinen umfasst, wobei der Server Informationen über Computerprogrammversionen (281, 282, 283) speichert, die für die mit den Ausrüstungsidentifikatoren identifizierten zumindest drei Computerplatinen verfügbar sind, wobei der Server außerdem Informationen über die wechselseitige Kompatibilität der für die Vielzahl von Computerplatinen verfügbaren Computerprogrammversionen speichert,
Empfangen (506) von Informationen, die Computerprogramme für die zumindest drei Computerplatinen der wechselseitig kompatiblen identifizierten Computerprogramme identifizieren;
Abrufen (508) zumindest eines Computerprogramms der identifizierten Computerprogramme für die zumindest drei Computerplatinen unter Verwendung der Informationen, die das Computerprogramm für die zumindest drei Computerplatinen identifizieren;
und Installieren (510) des zumindest einen abgerufenen Computerprogramms in der jeweiligen Computerplatine.

19. System, umfassend die Vorrichtung nach Anspruch 18 und einen Server, der eingerichtet ist, eine aktuelle Hardwarekonfiguration des dem eindeutigen Identifikator zugeordneten Aufzugssystems in einem dem Server zugeordneten Speicher zu speichern, um Informationen über Computerprogrammversionen, die für eine Vielzahl von mit einem Ausrüstungsidentifikator identifizierten Computerplatinen verfügbar sind, zu speichern und Informationen über die wechselseitige Kompatibilität der für die Vielzahl von Computerplatinen verfügbaren Computerprogrammversionen zu speichern.

20. Computerprogramm, umfassend einen Code, der ausgelegt ist, bei Ausführung auf einem Datenverarbeitungssystem folgendes zu bewirken:
Empfangen (500) eines eindeutigen Identifikators (162, 245) eines Aufzugssteuerungssystems durch eine Softwareaktualisierungscomputereinheit (101, 240), wobei das Aufzugssteuerungssystem zumindest drei Computerplatinen (210, 220, 230) umfasst, wobei jede Computerplatine einen Speicher (214, 224, 234) und zumindest einen Prozessor (211, 221, 231) umfasst;
Übertragen (501) des empfangenen eindeutigen Identifikators an einen Server (182, 260) durch die Softwareaktualisierungscomputereinheit über ein Netzwerk (180, 255), wobei der Server eine aktuelle Hardwarekonfiguration (274) des dem eindeutigen Identifikator zugeordneten Aufzugssteuerungssystems in einem dem Server zugeordneten Speicher (184, 270) speichert, wobei die aktuelle Hardwarekonfiguration Ausrüstungsidentifikatoren (U1, U2, U3) für die zumindest drei Computerplatinen umfasst, wobei der Server Informationen über Computerprogrammversionen (281, 282, 283), die für die mit den Ausrüstungsidentifikatoren identifizierten zumindest drei Computerplatinen verfügbar sind, speichert, wobei der Server außerdem Informationen über die wechselseitige Kompatibilität der für die Vielzahl von Computerplatinen verfügbaren Computerprogrammversionen (290) speichert;
Empfangen (506) von Informationen, die Computerprogramme für die zumindest drei Computerplatinen an der Softwareaktualisierungscomputereinheit, wobei die identifizierten Computerprogramme wechselseitig kompatibel sind;
Abrufen (508) zumindest eines Computerprogramms der identifizierten Computerprogramme für die zumindest drei Computerplatinen in die Softwareaktualisierungscomputereinheit unter Verwendung der Informationen, die die Computerprogramme für die zumindest drei Computerplatinen identifizieren; und
Installieren (510) des zumindest einen abgerufenen Computerprogramms in der jeweiligen Computerplatine durch die Softwareaktualisierungscomputereinheit.

21. Computerprogramm nach Anspruch 20, wobei das Computerprogramm auf einem nichtflüchtigen, computerlesbaren Medium gespeichert ist.

## Revendications

1. Procédé, comprenant :
la réception (500), par une unité d'ordinateur de mise à jour logicielle (101, 240), d'un identifiant unique (162, 245) d'un système de commande d'ascenseur (201), dans lequel le système de commande d'ascenseur comprend au moins trois cartes d'ordinateur (210, 220, 230), chaque carte d'ordinateur comprenant une mémoire (214, 224, 234) et au moins un processeur (211, 221, 231) ;
la transmission (502), par l'unité d'ordinateur de mise à jour logicielle, de l'identifiant unique reçu à un serveur (182, 260) sur un réseau (180, 255) ;
la récupération (504) d'informations d'une configuration matérielle actuelle (274) du système de commande d'ascenseur à l'aide de l'identifiant unique depuis une mémoire (184, 270) associée au serveur ;
la détermination (504), par le serveur, d'identifiants d'équipement (U1, U2, U3) à partir des informations de configuration matérielle actuelle pour les au moins trois cartes d'ordinateur ;
le fait de trouver, par le serveur à partir de la mémoire associée au serveur, au moins trois listes de versions de programme d'ordinateur (281, 282, 283), respectivement, pour les au moins trois cartes d'ordinateur d'après les identifiants d'équipement déterminés des au moins trois cartes d'ordinateur ;
la sélection, par le serveur, d'une liste parmi les au moins trois listes de versions de programme d'ordinateur ;
la sélection, par le serveur, d'une version de programme d'ordinateur à partir de la liste sélectionnée ;
la détermination, par le serveur, des versions de programme d'ordinateur dans les au moins deux listes de versions de programme d'ordinateur restantes qui sont compatibles avec la version de programme d'ordinateur sélectionnée d'après des informations de compatibilité de version de programme d'ordinateur prédéterminées (290) stockées dans la mémoire associée au serveur, donnant ainsi des informations qui identifient des programmes d'ordinateur pour les au moins trois cartes d'ordinateur, les programmes d'ordinateur identifiés étant mutuellement compatibles ;
la transmission (506) des informations identifiant les programmes d'ordinateur pour les au moins trois cartes d'ordinateur à l'unité d'ordinateur de mise à jour logicielle ;
la récupération (508) d'au moins un programme d'ordinateur des programmes d'ordinateur identifiés pour les au moins trois cartes d'ordinateur dans l'unité d'ordinateur de mise à jour logicielle à l'aide des informations identifiant les programmes d'ordinateur pour les au moins trois cartes d'ordinateur ; et
l'installation (510) de l'au moins un programme d'ordinateur récupéré dans la carte d'ordinateur respective par l'unité d'ordinateur de mise à jour logicielle.

2. Procédé selon la revendication 1, dans lequel la liste sélectionnée par le serveur, parmi les au moins trois listes de versions de programme d'ordinateur, est sélectionnée d'après un ordre prédéfini entre les au moins trois listes de versions de programme d'ordinateur.

3. Procédé selon la revendication 1 ou la revendication 2, dans lequel la version de programme d'ordinateur sélectionnée par le serveur est une version la plus récente.

4. Procédé selon la revendication 1, dans lequel la liste sélectionnée par le serveur, parmi les au moins trois listes de versions de programme d'ordinateur, est sélectionnée d'après un identifiant d'équipement transmis au serveur, à partir de l'unité d'ordinateur de mise à jour logicielle, et la version de programme d'ordinateur sélectionnée par le serveur est sélectionnée d'après un identifiant de version de programme d'ordinateur transmis au serveur à partir de l'unité d'ordinateur de mise à jour logicielle.

5. Procédé selon la revendication 1, dans lequel le procédé comprend en outre :
la transmission, à partir du serveur, des au moins trois listes de versions de programme d'ordinateur à l'unité d'ordinateur de mise à jour logicielle ;
la présentation d'au moins l'une des au moins trois listes de versions de programme d'ordinateur sur une interface utilisateur de l'unité d'ordinateur de mise à jour logicielle ;
la réception via l'interface utilisateur d'une entrée utilisateur qui amène le serveur à sélectionner la liste sélectionnée et à sélectionner la version de programme d'ordinateur sélectionnée ; et
la transmission de l'entrée utilisateur au serveur.

6. Procédé selon la revendication 1, dans lequel le procédé comprend en outre :
la réception, par l'unité d'ordinateur de mise à jour logicielle, d'au moins un signal indiquant une mise à niveau d'une carte d'ordinateur avec au moins un nouveau composant, la carte d'ordinateur mise à niveau étant parmi les au moins trois cartes d'ordinateur, au moins deux cartes d'ordinateur parmi les au moins trois cartes d'ordinateur restant non mises à niveau ;
la dérivation d'un identifiant d'équipement de la carte d'ordinateur mise à niveau, d'après des informations dans l'au moins un signal indiquant la mise à niveau de la carte d'ordinateur mise à niveau ;
la transmission, par l'unité d'ordinateur de mise à jour logicielle, de l'identifiant d'équipement de la carte d'ordinateur mise à niveau au serveur sur le réseau ; et
en réponse à la détermination des identifiants d'équipement à partir de la configuration matérielle actuelle, le remplacement d'un identifiant d'équipement déterminé de la carte d'ordinateur mise à niveau par l'identifiant d'équipement transmis au serveur pour obtenir une configuration matérielle actuelle mise à jour.

7. Procédé selon la revendication 6, dans lequel l'au moins un nouveau composant comprend au moins l'un parmi un processeur, un module de mémoire, un jeu de puces, un bus de messages et un dispositif de commande d'entrée/sortie.

8. Procédé selon la revendication 6, dans lequel l'identifiant d'équipement comprend au moins l'un parmi un modèle de processeur, un type de processeur, une taille de mémoire de la carte d'ordinateur, un modèle ou type de jeu de puces et un modèle ou type de bus de messages.

9. Procédé selon la revendication 6, dans lequel l'étape de réception de l'au moins un signal indiquant la mise à niveau de la carte d'ordinateur avec l'au moins un nouveau composant comprend :
la réception de l'au moins un signal en provenance d'une interface utilisateur connectée en communication à l'unité d'ordinateur de mise à jour logicielle, l'au moins un signal comprenant des informations indiquant au moins, si l'au moins un nouveau composant comprend un processeur ou une mémoire, et un identifiant du nouveau composant.

10. Procédé selon la revendication 9, dans lequel l'au moins un signal est saisi par un utilisateur via l'interface utilisateur.

11. Procédé selon la revendication 6, dans lequel l'étape de réception de l'au moins un signal indiquant la mise à niveau de la carte d'ordinateur avec l'au moins un nouveau composant comprend :
la mise sous tension de la carte d'ordinateur mise à niveau ; et
la transmission de l'au moins un signal indiquant la mise à niveau de la carte d'ordinateur à partir de la carte d'ordinateur mise à niveau, en réponse à la mise sous tension.

12. Procédé selon l'une quelconque des revendications 1-11, dans lequel l'identifiant unique d'un système d'ascenseur est transmis à partir d'une mémoire associée au système d'ascenseur à l'unité d'ordinateur de mise à jour logicielle.

13. Procédé selon l'une quelconque des revendications 1-12, dans lequel l'identifiant unique est transmis à l'unité d'ordinateur de mise à jour logicielle à partir d'une interface utilisateur associée à l'unité d'ordinateur de mise à jour logicielle.

14. Procédé selon l'une quelconque des revendications 1-13, dans lequel les versions de programme d'ordinateur mutuellement compatibles sont récupérées pour l'unité d'ordinateur de mise à jour logicielle à partir d'un système de distribution de fichiers pair à pair ou d'une table de hachage distribuée.

15. Procédé selon l'une quelconque des revendications 1-14, dans lequel les au moins trois cartes d'ordinateur sont connectées à un bus de messages partagé.

16. Procédé selon la revendication 15, le procédé comprenant en outre :
la connexion de l'unité d'ordinateur de mise à jour logicielle au bus de messages partagé.

17. Procédé selon la revendication 1, l'étape d'installation de l'au moins un programme d'ordinateur récupéré la carte d'ordinateur respective, comprend en outre :
la réception, par l'unité d'ordinateur de mise à jour logicielle, d'un signal indiquant une présence d'une connexion entre l'unité d'ordinateur de mise à jour logicielle et une carte d'ordinateur connectée parmi les au moins trois cartes d'ordinateur ; et
l'installation d'un programme d'ordinateur récupéré pour la carte d'ordinateur connectée, le programme d'ordinateur récupéré étant parmi l'au moins un programme d'ordinateur récupéré.

18. Appareil (101, 240) comprenant au moins un processeur (241) et au moins une mémoire (244) incluant un code de programme d'ordinateur, l'au moins une mémoire et le code de programme d'ordinateur étant configurés, avec l'au moins un processeur, pour amener l'appareil à réaliser au moins :
la réception (500), par l'appareil, d'un identifiant unique (162, 245) d'un système de commande d'ascenseur (201), dans lequel le système de commande d'ascenseur comprend au moins trois cartes d'ordinateur (210, 220, 230), chaque carte d'ordinateur comprenant une mémoire (214, 224, 234) et au moins un processeur (211, 221, 231) ;
la transmission (502), par l'appareil, de l'identifiant unique reçu à un serveur (182, 260) sur un réseau (180, 255), le serveur stockant une configuration matérielle actuelle (274) du système de commande d'ascenseur associé à l'identifiant unique dans une mémoire (184, 270) associée au serveur, la configuration matérielle actuelle comprenant des identifiants d'équipement (U1, U2, U3) pour les au moins trois cartes d'ordinateur, le serveur stockant des informations sur des versions de programme d'ordinateur (281, 282, 283) disponibles pour les au moins trois cartes d'ordinateur identifiées avec les identifiants d'équipement, le serveur stockant également des informations sur une compatibilité mutuelle des versions de programme d'ordinateur (290) disponibles pour la pluralité de cartes d'ordinateur ;
la réception (506) d'informations identifiant des programmes d'ordinateur pour les au moins trois cartes d'ordinateur, les programmes d'ordinateur identifiés étant mutuellement compatibles ;
la récupération (508) d'au moins un programme d'ordinateur des programmes d'ordinateur identifiés pour les au moins trois cartes d'ordinateur à l'aide des informations identifiant les programmes d'ordinateur pour les au moins trois cartes d'ordinateur ; et
l'installation (510) de l'au moins un programme d'ordinateur récupéré dans la carte d'ordinateur respective.

19. Système, comprenant l'appareil selon la revendication 18 et un serveur configuré pour stocker une configuration matérielle actuelle du système d'ascenseur associée à l'identifiant unique dans une mémoire associée au serveur, pour stocker des informations sur des versions de programme d'ordinateur disponibles pour une pluralité de cartes d'ordinateur identifiant avec un identifiant d'équipement, et pour stocker des informations sur une compatibilité mutuelle des versions de programme d'ordinateur disponibles pour la pluralité de cartes d'ordinateur.

20. Programme d'ordinateur comprenant un code adapté pour provoquer ce qui suit lorsqu'il est exécuté sur un système de traitement de données :
la réception (500), par une unité d'ordinateur de mise à jour logicielle (101, 240), d'un identifiant unique (162, 245) d'un système de commande d'ascenseur (201), dans lequel le système de commande d'ascenseur comprend au moins trois cartes d'ordinateur (210, 220, 230), chaque carte d'ordinateur comprenant une mémoire (214, 224, 234) et au moins un processeur (211, 221, 231) ;
la transmission (502), par l'unité d'ordinateur de mise à jour logicielle, de l'identifiant unique reçu à un serveur (182, 260) sur un réseau (180, 255), le serveur stockant une configuration matérielle actuelle (274) du système de commande d'ascenseur associé à l'identifiant unique dans une mémoire (184, 270) associée au serveur, la configuration matérielle actuelle comprenant des identifiants d'équipement (U1, U2, U3) pour les au moins trois cartes d'ordinateur, le serveur stockant des informations sur des versions de programme d'ordinateur (281, 282, 283) disponibles pour les au moins trois cartes d'ordinateur identifiées avec les identifiants d'équipement, le serveur stockant également des informations sur une compatibilité mutuelle des versions de programme d'ordinateur (290) disponibles pour la pluralité de cartes d'ordinateur ;
la réception (506) d'informations identifiant des programmes d'ordinateur pour les au moins trois cartes d'ordinateur sur l'unité d'ordinateur de mise à jour logicielle, les programmes d'ordinateur identifiés étant mutuellement compatibles ;
la récupération (508) d'au moins un programme d'ordinateur des programmes d'ordinateur identifiés pour les au moins trois cartes d'ordinateur dans l'unité d'ordinateur de mise à jour logicielle à l'aide des informations identifiant les programmes d'ordinateur pour les au moins trois cartes d'ordinateur ; et
l'installation (510) de l'au moins un programme d'ordinateur récupéré dans la carte d'ordinateur respective par l'unité d'ordinateur de mise à jour logicielle.

21. Programme d'ordinateur selon la revendication 20, dans lequel ledit programme d'ordinateur est stocké sur un support lisible par ordinateur non transitoire.
